# FASCICULE DE BREVET EUROPEEN

(11) **EP 1 449 722 B1**
(45) Date de publication et mention de la délivrance du brevet: **31.08.2005**
(21) Numéro de dépôt: 04100124.9
(22) Date de dépôt: 15.01.2004
(51) Int. Cl.: B60R 3/02

(54) **Véhicule à moteur équipé d'un marchepied escamotable**
Kraftfahrzeug mit ausklappbaren Trittstufen
Motor vehicle with retractable steps

(30) Priorité: 24.02.2003 FR 0302213
(43) Date de publication de la demande: 25.08.2004
(73) Titulaire: Groupe Mecalac, 74940 Annecy le Vieux (FR)
(72) Inventeur: Marchetta, Henri, 74320, SEVRIER (FR); Brehmer, Patrick, 74000, Annecy (FR); Boni, Maxime, 73800, Les Marches (FR)
(74) Mandataire: Palix, Stéphane

(56) Documents cités:
- FR-A1- 2 457 791
- US-A- 3 388 925
- US-B1- 6 179 312

## Description

La présente invention concerne un véhicule à moteur comprenant un marchepied selon le préambule de la revendication 1, comme connu du document US 6,179,312.

Les véhicules à moteur, par exemple des engins de travaux publics du type engin de manutention, chargeur ou élévateur, du type engin de terrassement chargeur-excavateur ou analogue comprennent une cabine de pilotage surélevée pour permettre à l'opérateur d'avoir une vision globale de surveiller ainsi son travail.

### Etat de la technique

Sur un engin de travaux public et notamment une pelle mécanique classique, le marchepied est centré entre les roues et aligné sur le gabarit extérieur de la machine.

Plusieurs problèmes sont à l'origine d'incidents plus ou moins graves pour la santé de l'opérateur. Le marchepied est souvent très décalé par rapport à l'ouverture de la porte. Cela oblige l'opérateur à s'accrocher à la porte mobile et à se hisser jusque la cabine en montée. Ou alors, l'opérateur se plaque latéralement contre la cabine à la descente, afin de ne pas tomber avant d'avoir atteint la marche supérieure.

De plus, la cabine est en surplomb par rapport au marchepied. Cela rend la montée difficile, car l'opérateur doit forcer sur les bras. La descente est rendue dangereuse, car l'opérateur ne voit pas la première marche.

Les architectures actuelles de marche pieds ne répondent donc pas aux attentes des utilisateurs. En effet, les conducteurs ont tendance à monter à et descendre du véhicule par les pneus et/ou les stabilisateurs ou encore à sauter directement de la cabine (qui est à plus de un mètre du sol). Or ces deux éléments ne sont non seulement pas prévus à cet effet mais sont de surcroît très glissant en raison des conditions de chantier. A l'heure actuelle, la montée et descente de la cabine de pilotage posent donc un véritable problème de sécurité.

On connaît d'après le document US- 6.179.312 un véritable escalier rétractable avec des marches, destiné à entrer et à sortir d'un véhicule comprenant une cabine. Les marches sont mobiles entre une position rentrée dans laquelle les marches sont sous la cabine de pilotage et une position sortie dans laquelle les marches sont exposées pour permettre une montée et une descente facilitée du conducteur.

Cependant, de part sa complexité et sa géométrie, il s'avère en effet difficile de prévoir un tel escalier pour des véhicules utilisés comme engins de terrassement particulièrement exposés sur des chantiers à des conditions d'humidité, de boue, d'autres salissures diverses et des chocs divers (recul sans visibilité, creusement en latéral près du marchepied, ...).

### Résumé de l'invention

Un premier problème que se propose de résoudre l'invention est d'obtenir un système de marches escamotables qui résout les problèmes évoqués ci-dessus. Un deuxième problème posé est d'équiper un véhicule à moteur et plus particulièrement un engin de travaux public avec un marchepied intégrant des marches répondant aux contraintes d'ergonomie, de fiabilité et de robustesse nécessaires pour un tel organe.

Selon l'invention, ce problème est résolu par un véhicule à moteur comprenant les caractéristiques de la revendication 1.

Un véhicule à moteur comprend une cabine de pilotage pour un opérateur et un marchepied avec au moins deux marches permettant d'accéder à la cabine de pilotage par une ouverture pouvant être fermée par une porte. Les marches sont mobiles entre une position rentrée dans laquelle les marches sont sous la cabine de pilotage et une position sortie dans laquelle les marches sont exposées pour permettre une montée et une descente facilitée de l'opérateur. Les marches passent de la position rentrée à la position sortie et inversement par pivotement par rapport à un axe de rotation sensiblement vertical.

Conformément à l'invention, le véhicule à moteur est caractérisé en ce que les marches sont sensiblement décalées sur l'horizontale, dans la position sortie, l'une par rapport à l'autre, et de part et d'autre de l'axe de rotation sensiblement vertical.

Autrement dit, par ce décalage, l'opérateur pourra monter dans sa cabine en mettant un pied sur l'une des marches puis l'autre pied sur l'autre marche et ainsi de suite. L'opérateur ne monte plus à la force des bras, mais en suivant un mouvement totalement ergonomique de montée d'un escalier, et sans être déséquilibré par des marches ou des barreaux superposés.

Très préférentiellement, le marchepied peut comprendre deux marches, situées à des hauteurs différentes, une marche supérieure et une marche inférieure. La marche supérieure peut être avantageusement sensiblement rectangulaire. En position sortie, cette marche supérieure présente un côté long qui peut être positionné sensiblement parallèlement à l'ouverture pour la porte. Cette marche supérieure peut être favorablement positionnée au niveau de l'ouverture pour la porte de la cabine de pilotage. L'opérateur voit donc la première marche en descendant et cette marche se trouve directement en face de l'ouverture de la cabine. La marche inférieure peut être sensiblement rectangulaire. En position sortie, cette marche inférieure présente un côté long, qui peut être positionné sensiblement perpendiculairement à l'ouverture pour la porte.

Les marches peuvent être chacune montées sur un axe de rotation différent et sensiblement vertical. Les marches peuvent pivoter en sens opposé pour passer de la position rentrée à la position sortie et réciproquement. Pour faire rentrer et sortir les marches, une possibilité est de monter un vérin hydraulique qui peut ensuite actionner un renvoi formant bielle pour chacune des marches. Dans une première alternative, les renvois formant bielle peuvent être montés pour tourner sur un pivot directement solidarisé à l'une des marches. Dans une deuxième alternative, les renvois formant bielle peuvent être montés pour tourner sur l'axe de rotation d'une autre des marches.

### Description des dessins

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue partielle en perspective d'un engin de travaux publics équipé d'un marchepied selon l'invention ;
- la Figure 2 représente une vue partielle agrandie en perspective de l'engin de travaux publics avec le marchepied en position escamotée ;
- la Figure 3 représente une vue partielle agrandie en perspective de l'engin de travaux publics avec le marchepied en position sortie ;

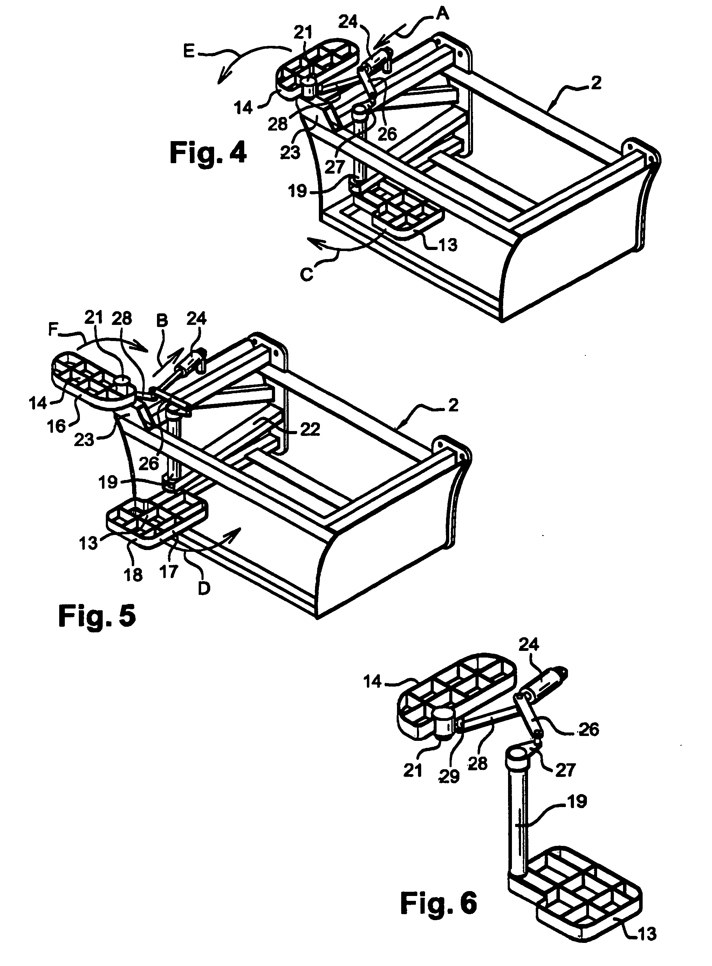

- la Figure 4 représente une vue en perspective du marchepied en position escamotée ;
- la Figure 5 représente une vue en perspective du marchepied en position sortie ; et
- la Figure 6 représente une vue en perspective du marchepied avec son mécanisme d'escamotage isolé.

### Description détaillée

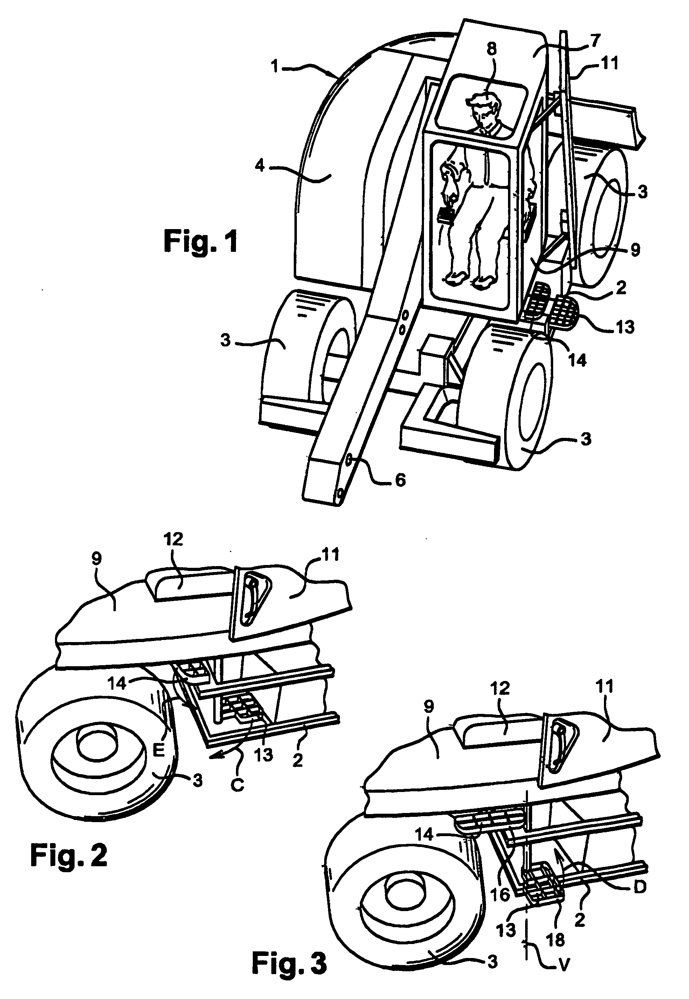

Un véhicule à moteur, par exemple un engin de travaux publics (1), tel que représenté en Figure 1, comprend un châssis (2), des roues (3), un compartiment moteur (4), un équipement de travail (6), sous la forme d'un bras articulé, à l'extrémité duquel est installé un outil de travail (non représenté) et une cabine de pilotage (7). Un opérateur (8) pilote l'engin de travaux publics (1) et accède à la cabine de pilotage (7) par une ouverture (9) fermée par une porte (11). L'opérateur (8) s'assied sur un siège (12) prévu dans la cabine de pilotage (7).

Un marchepied est prévu pour que l'opérateur (8) puisse accéder aisément à la cabine de pilotage (7). Le marchepied comprend une marche inférieure sensiblement horizontale (13) et une marche supérieure sensiblement horizontale (14). Selon l'invention, la marche inférieure (13) est décalée sur l'horizontale à droite d'un axe vertical (V) et la marche supérieure (14) est décalée sur l'horizontale à gauche de l'axe vertical (V).

La marche inférieure (13) et la marche supérieure (14) sont sensiblement rectangulaires. Lorsqu'elle est sortie, la marche supérieure (14) présente un côté long (16) positionné sensiblement parallèlement à l'ouverture (9) pour la porte (11). Lorsqu'elle est sortie, la marche inférieure (13) présente un côté long (17) positionné sensiblement perpendiculairement à l'ouverture (9) pour la porte (11).

Ces différences de longueur exposée permettent de rendre le marchepied analogue à un escalier incliné. La première marche inférieure (13) présente ainsi un rebord (18) éloigné du châssis (2) et de l'engin de travaux publics (1), et est facilement accessible au premier pied de l'opérateur (8). En position sortie, la marche supérieure (14) est rendue visible à partir du haut de la cabine de pilotage (7). En position avec les marches sorties (13 et 14), il n'y a plus de surplomb ou de montée directement verticale dans la cabine de pilotage (7).

La marche supérieure (14) est positionnée au niveau de l'ouverture (9) pour la porte (11) de la cabine de pilotage (7). Ainsi, le dernier mouvement de pied de l'opérateur (8) permet à ce dernier de rentrer directement dans la cabine (7), sans que ce dernier ne soit amené à faire un écart et de ce fait sans risque de chute.

Les deux marches (13 et 14) passent simultanément de la position rentrée à la position sortie et inversement, par pivotement par rapport à un axe sensiblement vertical, ces deux marches (13 et 14) conservant ainsi leur horizontalité. En position escamotée, les marches (13 et 14) rentrent dans le gabarit de l'engin de travaux publics (1), passent et restent à l'horizontale totalement sous le châssis (2). En position escamotée, les marches (13 et 14) sont protégées d'éventuels chocs latéraux ou par le dessous.

La marche inférieure (13) est montée pour pivotement sur un axe de rotation inférieur sensiblement vertical (19). La marche supérieure (14) est montée pour pivotement sur un axe de rotation supérieur sensiblement vertical (21). L'axe de rotation inférieur (19) tourne et est maintenu dans un palier (non visible) prévu au niveau d'une barre inférieure (22) du châssis (2). L'axe de rotation supérieur (21) tourne et est maintenu dans un palier (non visible) prévu au niveau d'une barre supérieure (23) du châssis (2).

Un vérin hydraulique (24) permet le passage des marches (13 et 14) de la position rentrée à la position sortie et de la position sortie à la position rentrée. Le vérin (24) est relié à une extrémité d'un premier renvoi formant bielle (26) et l'actionne ainsi. Une autre extrémité du premier renvoi formant bielle (26) est ensuite fonctionnellement connecté à une manivelle (27). Cette manivelle (27) est ensuite solidarisée à l'axe de rotation inférieur (19) de la marche inférieure (13). Le vérin hydraulique (24) est relié à une extrémité d'un deuxième renvoi formant bielle (28) et l'actionne ainsi. Une autre extrémité du deuxième renvoi formant bielle (28) est ensuite fonctionnellement connecté à un pivot (29). Ce pivot (29) est solidarisé à la marche supérieure (14), de manière décalée par rapport à l'axe de rotation supérieur (21).

Cette chaîne cinématique fait que les mouvements de va-et-vient horizontaux (Flèches A et B) du vérin hydraulique (24) font pivoter dans un plan horizontal (Flèches C et D) la marche inférieure (13) et fait pivoter dans un plan horizontal (Flèches E et F) la marche supérieure (14). Les pivotements se font en sens opposé pour les faire passer de la position rentrée à la position sortie et réciproquement.

La sortie et l'entrée du vérin hydraulique (24), et donc des marches (13 et 14), sont liés à l'escamotage des consoles du siège (12), qui est une action volontaire obligatoire de la part de l'opérateur (8) avant toute sortie de l'engin de travaux publics (1). La mise en mouvement peut-être liée à toute autre signe de la sortie de l'opérateur (8), tel que l'ouverture de la porte (11) ou à une action manuelle sur un bouton se trouvant à l'intérieur ou à l'extérieur de l'engin de travaux publics (1).

La présente invention n'est pas limitée au mode de réalisation décrit et illustré, de nombreuses modifications peuvent être réalisées sans pour autant sortir du cadre défini par la portée du jeu de revendications.

Le nombre et la forme des marches peuvent être variables. Un vérin hydraulique double effet ou un vérin hydraulique simple effet avec ressort de rappel peut être utilisé.

## Revendications

1. Véhicule à moteur, comprenant une cabine de pilotage (7) pour un opérateur (8) et un marchepied avec au moins deux marches (13, 14) permettant d'accéder à la cabine de pilotage (7) par une ouverture (9) pouvant être fermée par une porte (11), les marches (13, 14) étant mobiles entre une position rentrée dans laquelle les marches (13, 14) sont sous la cabine de pilotage (7) et une position sortie dans laquelle les marches (13, 14) sont exposées pour permettre une montée et une descente facilitée de l'opérateur (8), lesdites marches (13, 14) passant de la position rentrée à la position sortie et inversement par pivotement par rapport à un axe de rotation sensiblement vertical, **caractérisé en ce que** les marches (13, 14) sont sensiblement décalées sur l'horizontale, dans la position sortie, l'une par rapport à l'autre, et de part et d'autre de l'axe de rotation sensiblement vertical (V).

2. Véhicule à moteur selon la revendication 1, **caractérisé en ce que** le marchepied comprend deux marches (13, 14), une marche supérieure (14) et une marche inférieure (13) situées à des hauteurs différentes.

3. Véhicule à moteur selon la revendication 2, **caractérisé en ce que** la marche supérieure (14) est sensiblement rectangulaire et présente en position sortie un côté long (16) positionné sensiblement parallèlement à l'ouverture (9) pour la porte (11).

4. Véhicule à moteur selon la revendication 2 ou 3, **caractérisé en ce que** la marche supérieure (14) est positionnée au niveau de l'ouverture (9) pour la porte (11) de la cabine de pilotage (7).

5. Véhicule à moteur selon la revendication 2, **caractérisé en ce que** la marche inférieure (13) est sensiblement rectangulaire et présente en position sortie un côté long (17) positionné sensiblement perpendiculairement à l'ouverture (9) pour la porte (11).

6. Véhicule à moteur selon l'une quelconque des revendications précédentes, **caractérisé en ce que** les marches (13, 14) sont chacune montées sur un axe de rotation différent et sensiblement vertical (19, 21) et pivotent en sens opposé pour passer de la position rentrée à la position sortie et réciproquement

7. Véhicule à moteur selon la revendication 6, **caractérisé en ce qu'**il comprend un vérin hydraulique (24) actionnant un renvoi formant bielle (26, 28) pour chacune des marches (13, 14), et **en ce que** les renvois formant bielle (26, 28) sont montés pour tourner sur un pivot (29) directement solidarisé à l'une des marches (14) ou pour tourner sur l'axe de rotation (21) d'une autre des marches (13).

## Patentansprüche

1. Motorfahrzeug, umfassend eine Führerkabine (7) für eine Bedienungsperson (8) und eine Trittleiter mit wenigstens zwei Stufen (13, 14), die den Zugang zur Führerkabine (7) durch eine Öffnung (9) ermöglicht, die durch eine Tür (11) geschlossen werden kann, wobei die Stufen (13, 14) bewegt werden können zwischen einer eingezogenen Position, in der die Stufen (13, 14) sich unter der Führerkabine (7) befinden, und einer ausgefahrenen Position, in der die Stufen (13, 14) freigelegt sind, um der Bedienungsperson (8) leichteres Hinaufsteigen und Herabsteigen zu ermöglichen, wobei diese Stufen (13, 14) durch Schwenken bezüglich einer im Wesentlichen vertikalen Drehachse von der eingezogenen Position in die ausgefahrene Position übergehen und umgekehrt, **dadurch gekennzeichnet, dass** die Stufen (13, 14) in der ausgefahrenen Position in der Waagerechten und zu beiden Seiten der im Wesentlichen vertikalen Drehachse (V) deutlich gegeneinander versetzt sind.

2. Motorfahrzeug nach Anspruch 1, **dadurch gekennzeichnet, dass** die Trittleiter zwei Stufen (13, 14) umfasst, eine obere Stufe (14) und eine untere Stufe (13), die sich in unterschiedlicher Höhe befinden.

3. Motorfahrzeug nach Anspruch 2, **dadurch gekennzeichnet, dass** die obere Stufe (14) im Wesentlichen rechteckig ist und in der ausgefahrenen Position eine lange Seite (16) aufweist, die im Wesentlichen parallel zur Öffnung (9) der Tür (11) angeordnet ist.

4. Motorfahrzeug nach Anspruch 2 oder 3, **dadurch gekennzeichnet, dass** die obere Stufe (14) in Höhe der Öffnung (9) für die Tür (11) der Führerkabine (7) angeordnet ist.

5. Motorfahrzeug nach Anspruch 2, **dadurch gekennzeichnet, dass** die untere Stufe (13) im Wesentlichen rechteckig ist und in der ausgefahrenen Position eine lange Seite (17) aufweist, die im Wesentlichen senkrecht zur Öffnung (9) für die Tür (11) angeordnet ist.

6. Motorfahrzeug nach einem der vorstehenden Ansprüche, **dadurch gekennzeichnet, dass** die Stufen (13, 14) jeweils auf einer anderen und im Wesentlichen vertikalen Drehachse (19, 21) montiert sind und in entgegengesetzter Richtung schwenken, um von der eingezogenen Position in die ausgefahrene Position überzugehen und umgekehrt.

7. Motorfahrzeug nach Anspruch 6, **dadurch gekennzeichnet, dass** es einen hydraulischen Zylinder (24) umfasst, der eine Umlenkstange (26, 28) für jede der Stufen (13, 14) antreibt, und die Umlenkstangen (26, 28) so montiert sind, dass sie sich auf einem Schwenkbolzen (29) drehen, der mit einer der Stufen (14) direkt verbunden ist, oder sich auf der Drehachse (21) einer anderen der Stufen (13) drehen.

## Claims

1. A motor vehicle comprising a control cab (7) for an operator (8) and a stairway with at least two steps (13, 14) giving access to the control cab (7) via an opening (9) that can be closed by a door (11), the steps (13, 14) being movable between a retracted position in which the steps (13, 14) are beneath the cab (7), and an extended position in which the steps (13, 14) are exposed to allow the operator (8) to climb up into and climb down from the cab easily, the said steps (13, 14) moving from the retracted position to the extended position and vice versa by pivoting relative to a substantially vertical axis of rotation **characterized in that** the steps (13, 14) in the extended position are significantly offset horizontally from one another and on either side of the substantially vertical axis of rotation (V).

2. The motor vehicle of claim 1 **characterized in that** the stairway comprises two steps (13, 14), an upper step (14) and a lower step (13) located at different heights.

3. The motor vehicle of claim 2 **characterized in that** the upper step (14) is substantially rectangular and when in the extended position presents a long side (16) positioned substantially parallel to the opening (9) for the door (11).

4. The motor vehicle of claim 2 or 3 **characterized in that** the upper step (14) is positioned at the same level as the opening (9) for the door (11) of the control cab (7).

5. The motor vehicle of claim 2 **characterized in that** the lower step (13) is substantially rectangular and when in the extended position presents a long side (17) positioned substantially parallel to the opening (9) for the door (11).

6. The motor vehicle of any of the preceding claims **characterized in that** the steps (13, 14) are each mounted on a different, substantially vertical axis of rotation (19, 21) and pivot in opposing directions to move from the retracted position to the extended position and vice versa.

7. The motor vehicle of claim 6 **characterized in that** it comprises a hydraulic cylinder (24) actuating a countershaft constituting a connecting rod (26, 28) for each of steps (13, 14) and **in that** the countershafts constituting connecting rods (26, 28) are mounted to rotate on a pivot (29) directly fastened to one of the steps (14) or to rotate on the axis of rotation (21) of one of the other steps (13).
